# EUROPEAN PATENT SPECIFICATION

(11) **EP 1 121 655 B1**
(45) Date of publication and mention of the grant of the patent: **12.07.2006**
(21) Application number: 99970761.5
(22) Date of filing: 15.10.1999
(51) Int. Cl.: G06F 17/30

(54) **ACCESSING A HIERARCHICAL DATA STORE THROUGH AN SQL INPUT**
ZUGRIFF ZU HIERARCHISCHEM DATENSPEICHER VIA SQL-EINGABE
ACCES A UNE MEMOIRE DE DONNEES HIERARCHIQUE PAR UNE ENTREE SQL

(30) Priority: 16.10.1998 US 104682 P
(43) Date of publication of application: 08.08.2001
(73) Proprietor: Computer Associates Think, Inc., Islandia, New York 11749 (US)
(72) Inventor: DEFFLER, Tad, Boonton, NJ 07005 (US); BARI, Arkady, Southampton, PA 18996-2931 (US)
(74) Representative: Dunlop, Hugh Christopher
(86) International application number: PCT/US1999/023876
(87) International publication number: WO 2000/023917

(56) References cited:
- US-A- 5 295 256
- US-A- 5 764 978
- US-A- 5 794 229
- US-A- 5 802 511
- US-A- 5 822 750
- HSIEH S -Y ET AL: "Capturing the objected-oriented database model in relational form" PROCEEDINGS. THE SEVENTEENTH ANNUAL INTERNATIONAL COMPUTER SOFTWARE AND APPLICATIONS CONFERENCE (CAT. NO.93CH3349-8), PROCEEDINGS OF 1993 IEEE 17TH INTERNATIONAL COMPUTER SOFTWARE AND APPLICATIONS CONFERENCE COMPSAC '93, PHOENIX, AZ, USA, 1-5 NOV. 19, pages 202-208, XP010140187 1993, Los Alamitos, CA, USA, IEEE Comput. Soc. Press, USA ISBN: 0-8186-4440-0
- MENG W ET AL: "Construction of a relational front-end for object-oriented database systems" PROCEEDINGS OF THE INTERNATIONAL CONFERENCE ON DATA ENGINEERING. VIENNA, APR. 19 - 23, 1993, LOS ALAMITOS, IEEE COMP. SOC. PRESS, US, vol. CONF. 9, 19 April 1993 (1993-04-19), pages 476-483, XP010095471 ISBN: 0-8186-3570-3
- MENG W ET AL: "A THEORY OF TRANSLATION FROM RELATIONAL QUERIES TO HIERARCHICAL QUERIES" IEEE TRANSACTIONS ON KNOWLEDGE AND DATA ENGINEERING, IEEE INC. NEW YORK, US, vol. 7, no. 2, 1 April 1995 (1995-04-01), pages 228-245, XP000541405 ISSN: 1041-4347

## Description

### Field of the Invention

The present invention relates to a database management system, and in particular to an Application Programming Interface (API) that allows application programs access to various database management systems.

### Background Information

Accessing of different database management systems is discussed in Meng et al "Construction of Relational Front-End for Object-Oriented Database Systems". Proceedings of the International Conference on Data Engineering, Vienna, 19 to 23 April 1993, Los Almitos IEEE Comp Soc Press, US vol Conf 9, 19 April 1993 pages 476-483. That paper discusses the difficulty in a heterogeneous environment containing different types of database systems, for users of one type of database system to access data stored in different types of database systems and in particular the special type of heterogeneous database system which allows relational database users to access information stored in an object-oriented database. Hsieh et al "Capturing the object-oriented, database model in relational form" Proceedings of 1993 IEEE 17 International Computer Software and Applications Conference, Phoenix AZ, USA 1 to 5 November 19, pages 202-208 also discusses how to make an object-oriented database look like a relational database.

Open DataBase Connectivity (ODBC) is an Application Programming Interface (API) that provides a common interface for accessing various structure query language (SQL) based database management systems. Most vendors have added an ODBC interface to their relational databases. One major disadvantage of the conventional ODBC is that it was designed to access relational database management systems that use standard SQL language in their queries, and its use outside the relational databases has met with significant problems because SQL assumes the relational nature of the database.

Therefore it is desirable to provide a system and method for providing an ODBC interface or driver that allow access to non-relational data store such as a hierarchical object/property model.

### Summary of the Invention

In a first aspect, the present invention provides a method according to claim 1.

The invention also relates to program code for carrying out the method.

In accordance with a second aspect of the invention an apparatus according to claim 8 is provided

Preferably, the tables hold pointers that point to the actual data stored in the hierarchical data store.

### Brief Description of the Drawings

Figure 1 is a block diagram showing an ODBC driver interfaced between an SQL report generator and a hierarchical data store according to the present invention.
Figure 2 is a flow chart of the ODBC driver according to the present invention.
Figure 3 illustrates a representation of a hierarchical data store and that of an equivalent relational database.

### Detailed Description of the Invention

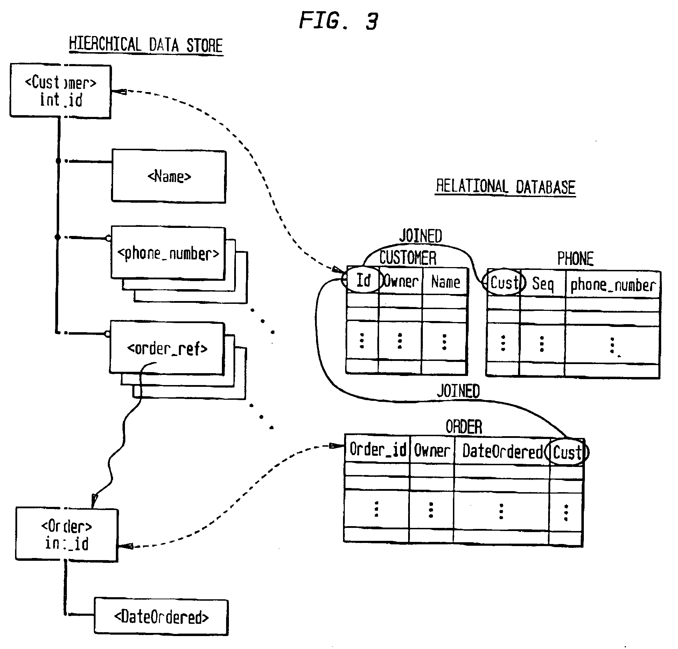

A hierarchical data store is represented as a graph of objects and properties. Objects may be owned by an conceptually aggregated into other objects. Objects may hold references to other objects via reference properties. Properties are owned by an aggregated into objects. FIG.3 includes a representation of such a hierarchical data store and that of an equivalent relational database.

The hierarchical data store in FIG.3 is a model of customers and their order information. The data store includes an object or a group of objects called "Customer" each having a unique internal identification number, "int_id". The "Customer" object has three properties: one scalar property and two vector properties. The one scalar property is of type "Name" which can hold only one value by definition. The first vector property is of type "Phone_number" which may hold many values by definition. The second vector property is of type "Order_ref" which may also hold many values. Each value of "Order_ref" is a pointer which references another object called "Order". The "Order" object has a property of type "DateOrdered" which stores the date of a particular order that has been placed. The equivalent data store in a relational database can be represented as three separate tables as shown on the right side of FIG. 3. A "Customer" table has two columns named "Id" and "Name", an "Order" table has three columns named "Order_id", "DateOrdered" and "Cust", and a "Phone" table has three columns named "Cust", "Seq" and "Phone_number". The three tables are linked to each other through "Id" of Customer, "Cust" of Phone and "Cust" of Order which have identical values.

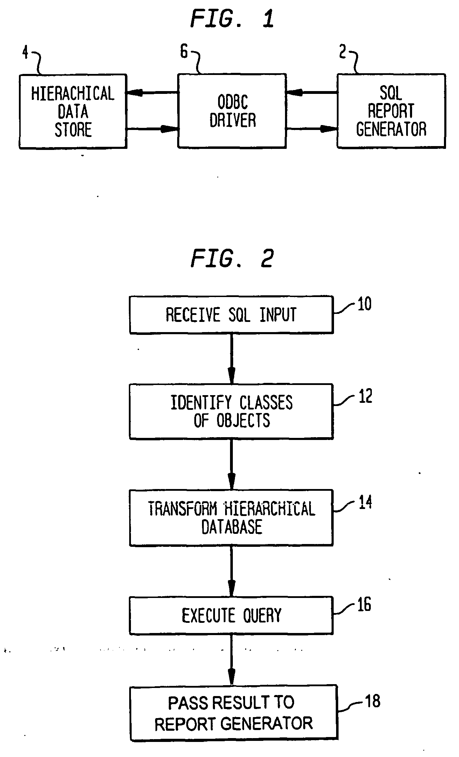

FIG. 1 is a block diagram showing an ODBC driver 6 interfaced between an SQL report generator 2 and a hierarchical data store 4. As discussed above, a conventional ODBC is designed to access relational databases using standard SQL language queries. The ODBC driver 6 of the present invention allows standard SQL language queries from an SQL report generator 2 to be used against a standard object/property model of information such as a hierarchical data store 4 according to the steps of FIG. 2. In step 10, the driver 6 receives the SQL input from the generator 2. In step 12, the driver 6 identifies object classes and their properties to be processed based on the received SQL input. In step 14, the hierarchical data store 4 is transformed into relational database tables with various columns such that the hierarchical data store 4 appears to be a relational database to the SQL report generator 2. In a preferred embodiment, step 14 involves the following manipulations such that the hierarchically stored database is transformed into relational database tables:
1. each class of object is transformed into a table. Each table of this type has two pseudocolumns: an "Id" that contains the unique identifier of the instance and is the primary key, and an "Owner" that contains a foreign key reference back to the owning object;
2. each non-reference scalar property of an object becomes a column in the object's class table; and
3. each non-reference vector property is transformed into a table. Each table of this type has two pseudocolumns: a "Sequence" column that contains a sequence value for each element of the vector and is part of the primary key for the table, and an "Owner" column that contains a foreign key back to the owning object and is part of the primary key; and
4. each reference property, both scalar and vector, may be used to calculate a foreign key relationship from the referenced object to the object owning the reference property.

When the necessary tables and columns are created/transformed, they preferably have pointers that point to the actual data residing in the hierarchical data store, and do not store the data themselves. The query contained in the SQL input is then executed in step 16 on the transformed tables. In step 18, the result of the execution is then passed to the report generator 2 that transmitted the SQL input.

A more detailed explanation of the steps in FIG. 2 will be provided below with reference to a couple of example SQL inputs. As one example, assume that the ODBC driver 6 receives the following SQL input query transmitted from the SQL report generator 2:
Select DateOrdered from Order a, Customer b where a.Cust = b.Id and b.Name = "Doe".

The above SQL input means that the generator would like to receive DateOrdered for all orders that "Doe" has placed. In relational terms, the way the Customer and the Order tables are connected or joined is that the value in the "Cust" column of the Order table should match the value in the Id column of the Customer table. The "Id" is the primary key for the Customer table and "Cust" is a foreign key of the Order table. As can be appreciated by persons of ordinary skill in the art, the hierarchical data store in FIG. 3 is not set up in a form that is readily usable by a conventional ODBC interface. This is one of the problems that is solved by the ODBC driver 6 according to the present invention.

The ODBC driver 6 analyzes the received SQL input and identifies the object classes that need to be processed. The ODBC driver 6 then transforms each object class into a table. In other words, a database table is created for each identified object class because object classes map to tables. In the example above, there are only two objects, "Customer" and "Order". Accordingly, two tables named "Customer" and "Order" are created. As part of the transformation process, the columns for the tables are created partly by analyzing what columns are being referenced in the received SQL language and by analyzing the properties of the object classes since columns map to the properties. In addition, the internal identification number "int_id" is mapped to a column of the corresponding table. As a result of the transform, the ODBC driver creates a "Customer" table with "Id" and "Name" columns, and an "Order" table with "Order_id", "DateOrdered" and "Cust" columns as shown in FIG. 3. The "int_id" and "Name" of the Customer object map to "Id" and "Name" columns of the "Customer" table, and the "int_id" and "DateOrdered" of the Order object map to "Order_id", "DateOrdered" columns of the "Order" table.

At this point, the only column that we need to synthesize is the "Cust" column of the Order table. However, the customer property in the hierarchical data store does not exist in the "Order" object. In other words, there's no property in the Order object pointing back to the "Cust" ("int_id") of the Customer object. In fact, it's the inverse of the relational database because it's the Customer object that points to the Order object. This is a difference in the topologies between a relational database and an object/property model such as the hierarchical data store.

In this case, it is recognized that the "Cust" column is a foreign key in the relational database. The foreign key concept is similar to a reference property in the hierarchical data store such as the "Order_ref" property of the "Customer" object. Recognizing that the query requires a foreign key backwards, the "Order_ref" property of the "Customer" object is read, the inverse relationship is synthesized, and the "Cust" column is then synthesized or created using the "int_id" of the Customer object.

With the necessary tables and columns fully built, the tables preferably store pointers that point to the actual data residing in the hierarchical data store, and do not store the data themselves. Alternatively, actual data may be stored in the tables.

In a second example of an SQL language input, assume that the ODBC driver 6 receives the following:
Select phone_number from Customer a, Phone b where a.Id = b.Cust and a.Name = "Sears".

In this example, a different transform occurs because it references a vector property "phone_number". As discussed above, each non-reference vector property is transformed into a table. The property itself maps to one column named "phone_number". Two more columns are synthesized. One column named "Cust" is the id ("int_id") of the object ("Customer") that owned the "phone_number" and a second column named "seq" is an arbitrary increasing number so that different phone numbers for the same object can be differentiated.

As in the first example, once the necessary tables and columns are fully built, the tables preferably store pointers that point to the actual data residing in the hierarchical data store. The SQL input is then executed using the transformed tables. The data matching the selection criteria of the SQL input are selected from the hierarchical data store pointed to by the pointers stored in the transformed tables and passed to the report generator 2. Again, actual data may be stored in the tables.

## Claims

1. A method of accessing data stored in a data store (4) composed of objects, in which objects may be owned by and conceptually aggregated into other objects, the method comprising receiving (10) a SELECT SQL input and **characterized by** the steps of:
analyzing the SELECT SQL input to identify object classes of the data store and properties associated with said object classes, wherein the object classes and the properties associated with said object classes correspond to tables and columns referenced in the SELECT SQL input;
creating relational database tables based on the identified object classes and properties;
populating the created relational database tables with corresponding data residing in the identified object classes and properties of the data store or with pointers to said data; and
executing (16) the SELECT SQL input using the populated tables.

2. A method according to claim 1, for accessing data comprising an object having at least one scalar property and at least one vector property, wherein the step of creating relational database tables comprises creating a relational database table for each vector property of the object.

3. A method according to claim 2, wherein a column of the table is populated with an arbitrary increasing number to differentiate vector properties for the object.

4. A method according to claim 2 or 3, comprising the step of providing a table for each class of object, wherein each non-reference scalar property, being a scalar property of an object not referenced by another object, becomes a column in the table for the class of the object.

5. A method according to any one of the preceding claims, wherein each class of object is transformed into a table comprising a pseudocolumn that contains a unique identifier of each instance of the class of object.

6. A method according to any one of the preceding claims, which comprises creating a foreign key relationship to an owning object in the data store by creating a column in the corresponding relational database table populated with an identifier identifying the owning object.

7. A data medium having program code stored thereon which, when executed on a computer, causes the computer to perform the method of any one of claims 1-6.

8. Apparatus for accessing data stored in a data store composed of objects, in which objects may be owned by and conceptually aggregated into other objects (4) comprising a driver (6) for connecting to an SQL report generator (2) and for receiving a SELECT SQL input generated therein, the driver **characterized by**:
analyzing means (12) for analyzing the SELECT SQL input to identify object classes of the data store and their properties associated with the object classes, wherein the object classes and properties associated with said object classes correspond to tables and columns referenced in the SELECT SQL input;
means (14) for creating relational database tables based on object classes and properties identified by the analyzing means ;
means for populating the created relational database tables with corresponding data residing in the identified object classes and properties of the data store or with pointers to said data; and
means for executing (16) the SELECT SQL input using the populated tables.

## Patentansprüche

1. Verfahren zum Zugreifen auf Daten, die in einem Datenspeicher (4) gespeichert sind, der aus Objekten zusammengesetzt ist, wobei Objekte anderen Objekten gehören können oder konzeptuell zu anderen Objekten zusammengefasst sein können, wobei das Verfahren das Empfangen (10) einer SELECT SQL-Eingabe umfasst und durch folgende Schritte **gekennzeichnet** ist:
Analysieren der SELECT SQL-Eingabe zum Identifizieren von Objektklassen des Datenspeichers und von Eigenschaften, die Objektklassen zugeordnet sind, wobei die Objektklassen und die Eigenschaften, die den Objektklassen zugeordnet sind, Tabellen und Spalten entsprechen, auf die in der SELECT SQL-Eingabe verwiesen wird;
Erstellen relationaler Datenbanktabellen auf der Grundlage der identifizierten Objektklassen und Eigenschaften;
Ausfüllen der erstellten relationalen Datenbanktabellen mit entsprechenden Daten, die sich in den identifizierten Objektklassen und Eigenschaften des Datenspeichers befinden, oder mit Zeigern, die zu den Daten zeigen; und
Ausführen (16) der SELECT SQL-Eingabe unter Verwendung der ausgefüllten Tabellen.

2. Verfahren nach Anspruch 1 zum Zugreifen auf Daten, die ein Objekt umfassen, das wenigstens eine skalare Eigenschaft und wenigstens eine Vektoreigenschaft aufweist, wobei der Schritt des Erstellens relationaler Datenbanktabellen das Erstellen relationaler Datenbanktabellen für jede Vektoreigenschaft des Objekts umfasst.

3. Verfahren nach Anspruch 2, wobei eine Spalte der Tabelle mit einer willkürlich zunehmenden Zahl ausgefüllt ist, um Vektoreigenschaften für das Objekt zu differenzieren.

4. Verfahren nach Anspruch 2 oder 3, umfassend den Schritt des Bereitstellens einer Tabelle für jede Objektklasse, wobei jede verweisfreie skalare Eigenschaft - bei der es sich um eine skalare Eigenschaft eines Objekts handelt, auf das nicht durch ein anderes Objekt verwiesen wird - zu einer Spalte in der Tabelle für die Klasse des Objekts wird.

5. Verfahren nach einem der vorangehenden Ansprüche, wobei jede Objektklasse in eine Tabelle umgewandelt wird, die eine Pseudospalte umfasst, die einen eindeutigen Identifikator jeder Instanz der Objektklasse enthält.

6. Verfahren nach einem der vorangehenden Ansprüche, umfassend das Herstellen einer Fremdschlüsselbeziehung zu einem Obersatzobjekt in dem Datenspeicher durch Erstellen einer Spalte in der entsprechenden relationalen Datenbanktabelle, die mit einem Identifikator ausgefüllt ist, der das Obersatzobjekt identifiziert.

7. Datenmedium mit darauf gespeichertem Programmcode, der, wenn er auf einem Computer ausgeführt wird, den Computer veranlasst, das Verfahren nach einem der Ansprüche 1-6 auszuführen.

8. Vorrichtung zum Zugreifen auf Daten, die in einem Datenspeicher (4) gespeichert sind, das aus Objekten besteht, wobei Objekte anderen Objekten gehören oder konzeptuell zu anderen Objekte zusammengefasst sein können, umfassend einen Treiber (6) zum Verbinden mit einem SQL-Berichtsgenerator (2) und zum Empfangen einer darin erzeugten SELECT SQL-Eingabe, wobei der Treiber **gekennzeichnet ist durch**:
ein Analysemittel (12) zum Analysieren der SELECT SQL-Eingabe zum Identifizieren von Objektklassen des Datenspeichers und ihrer Eigenschaften, die den Objektklassen zugeordnet sind, wobei die Objektklassen und die Eigenschaften, die den Objektklassen zugeordnet sind, Tabellen und Spalten entsprechen, auf die in der SELECT SQL-Eingabe verwiesen wird;
ein Mittel (14) zum Erstellen relationaler Datenbanktabellen auf der Grundlage von Objektklassen und Eigenschaften, die **durch** das Analysemittel identifiziert worden sind;
ein Mittel zum Ausfüllen der erstellten relationalen Datenbanktabellen mit entsprechenden Daten, die sich in den identifizierten Objektklassen und Eigenschaften des Datenspeichers befinden, oder mit Zeigern, die zu den Daten zeigen; und
ein Mittel zum Ausführen (16) der SELECT SQL-Eingabe unter Verwendung der ausgefüllten Tabellen.

## Revendications

1. Procédé pour accéder à des données stockées dans une mémoire de données (4) composées d'objets, dans laquelle les objets peuvent appartenir à et être agrégés de façon conceptuelle en d'autres objets, le procédé comprenant la réception (10) d'une entrée SQL SELECT et **caractérisé par** les étapes consistant à :
analyser l'entrée SQL SELECT pour identifier des classes d'objet de la mémoire de données et des propriétés associées auxdites classes d'objet, dans lequel les classes d'objet et les propriétés qui leur sont associées correspondent à des tables et à des colonnes référencées dans l'entrée SQL SELECT ;
créer des tables de base de données relationnelle sur la base des classes et des propriétés d'objet identifiées ;
peupler les tables de base de données relationnelle créées avec des données correspondantes résidant dans les classes et les propriétés d'objet identifiées de la mémoire de données ou avec des pointeurs sur lesdites données ; et
exécuter (16) l'entrée SQL SELECT en utilisant les tables peuplées.

2. Procédé selon la revendication 1, pour accéder à des données comprenant un objet ayant au moins une propriété scalaire et au moins une propriété vectorielle, dans lequel l'étape consistant à créer des tables de base de données relationnelle comprend la création d'une table de base de données relationnelle pour chaque propriété vectorielle de l'objet.

3. Procédé selon la revendication 2, dans lequel une colonne de la table est peuplée avec un nombre croissant arbitraire pour différencier les propriétés vectorielles pour l'objet.

4. Procédé selon la revendication 2 ou 3, comprenant l'étape consistant à fournir une table pour chaque classe d'objet, dans lequel chaque propriété scalaire de non-référence, qui est une propriété scalaire d'un objet non référencé par un autre objet, devient une colonne dans la table pour la classe de l'objet.

5. Procédé selon l'une quelconque des revendications précédentes, dans lequel chaque classe d'objet est transformée en une table comprenant une pseudo-colonne qui contient un identificateur unique de chaque instance de la classe d'objet.

6. Procédé selon l'une quelconque des revendications précédentes, qui comprend la création d'une relation de clé étrangère à un objet propriétaire dans la mémoire de données en créant une colonne dans la table de base de données relationnelle correspondante peuplée avec un identificateur identifiant l'objet propriétaire.

7. Support d'information ayant un code de programme stocké en son sein qui, lorsqu'il est exécuté sur un ordinateur, amène l'ordinateur à effectuer le procédé selon l'une quelconque des revendications 1 à 6.

8. Appareil pour accéder à des données stockées dans une mémoire de données composées d'objets, dans laquelle les objets peuvent appartenir à et être agrégés de façon conceptuelle en d'autres objets (4) comprenant un gestionnaire (6) pour la connexion à un générateur de rapport SQL (2) et pour recevoir une entrée SQL SELECT produite en son sein, le gestionnaire étant **caractérisé par** :
un moyen d'analyse (12) pour analyser l'entrée SQL SELECT pour identifier des classes d'objet de la mémoire de données et leurs propriétés associées aux classes d'objet, dans lesquelles les classes d'objet et les propriétés qui leur sont associées correspondent à des tables et à des colonnes référencées dans l'entrée SQL SELECT ;
un moyen (14) pour créer des tables de base de données relationnelle sur la base des classes et des propriétés d'objet identifiées par le moyen d'analyse ;
un moyen pour peupler les tables de base de données relationnelle créées avec des données correspondantes résidant dans les classes et les propriétés d'objet identifiées de la mémoire de données ou avec des pointeurs sur lesdites données ; et
un moyen pour exécuter (16) l'entrée SQL SELECT en utilisant les tables peuplées.
